# EUROPEAN PATENT APPLICATION

(11) **EP 4 434 946 A1**
(43) Date of publication of application: **25.09.2024**
(21) Application number: 23199525.9
(22) Date of filing: 25.09.2023
(51) Int. Cl.: C03B 37/025, C03C 25/12

(54) **APPARATUS AND METHOD FOR CONSTRAINING AN OPTICAL FIBER IN A DRAW TOWER**

(30) Priority: 21.03.2023 IN 202311019479
(71) Applicant: Sterlite Technologies Limited, Gurugram, Haryana 122102 (IN)
(72) Inventor: REDDY, Dr. Sudhakar, Gurugram (IN); GOPAL, Pawar, Gurugram (IN); MISHRA, Pranjal, Gurugram (IN)
(74) Representative: Sach, Greg Robert

(57) **Abstract**

The present disclosure relates to a method and apparatus for constraining an optical fiber (104) in the draw tower (100, 101). The method (700) includes steps of trapping (714) the optical fiber (104) in a central position along a vertical axis (Y-Y) by one or more acoustic waves generated by an acoustic centering apparatus (112). In particular, the vertical axis (Y-Y) is parallel to a draw tower axis (Y'-Y') and/or coincides with the draw tower axis (Y'-Y'). The movement of the optical fiber (104) is constrained within 1 milli-meter from the vertical axis (Y-Y) with a coating ovality of a coated optical fiber (105) is less than 4%.

## Description

### Cross-Reference to Related Applications

This application claims the benefit of Indian Application No. 202311019479 titled "APPARATUS AND METHOD FOR CONSTRAINING AN OPTICAL FIBER IN A DRAW TOWER" filed by the applicant on March 21, 2023, which is incorporated herein by reference in its entirety.

### Field of the Invention

Embodiments of the present invention relate to the field of telecommunication fiber cables and more particularly, relate to an apparatus for constraining an optical fiber in a draw tower and a method thereof.

### Description of the Related Art

Optical fiber is the leading alternative to traditional materials used for data signal communication such as copper wiring. Optical fiber is now widely utilized in a variety of electronic devices and systems to facilitate the high-speed communication of voice, video, and data signals at high bandwidths.

Usually, the optical fibers are drawn from a glass preform, which is a cylindrical body made up of glass. The optical fibers while being drawn from the draw tower must be maintained at their central position. If not centered in the draw tower, the optical fiber goes in contact with the wall of the draw tower which can break the optical fiber. Further, the quality of the coating decreases for example thickness, concentricity, geometric shape (ovality), etc. The centring of the optical fiber minimizes physical damage of the optical fiber by preventing the contact of optical fiber to the neighbor walls of the draw tower.

Optical fiber may use common levitation methods based on acoustic pressure (ultrasonic standing wave or near-field ultrasonics), electric forces (electrostatic or electrodynamic), magnetic forces, optical pressure, or aerodynamics. However, electric levitation requires an intricate control loop monitoring the vertical position of the particle. Magnetic levitation is limited to diamagnetic materials; water is diamagnetic, but magnetic particles, which are commonly used in microfluidics, would remain localized at the droplet edge

There are various techniques to draw optical fiber from the draw tower. In the conventional technique centring of the optical fiber is done using a pneumatic based centring element wherein the high-pressure fluid provides a centering force, that requires constant flow of fluids in the vicinity of the optical fiber. In general, fluids have some impurities which impact the quality of the optical fiber.

Further, acoustic levitation systems are well known for levitation of objects by using standing acoustic pressure waves between an emitter generating these waves and a reflector. Typically, a standing acoustic wave pattern is developed with a length of half of its wavelength between a usually planar emitter surface and a concave reflector with a preferentially spherical surface section providing significantly higher levitation forces compared to flat reflector surfaces. Besides single-axis configurations (with one emitter-reflector pair) multi-axis configurations are common as well.

US patent application no. US5500493A discloses an acoustic levitation apparatus and method to levitate a glass object in a centre position along a vertical axis of the glass object, by generating non-standing wave acoustic beams using acoustic transducers.

Another US patent application no. US8973408B2 discloses a non-contact centring device having two tapered side walls in which high-pressure fluid is delivered to the non-contact centring device. The non-contact centring device acts as a fluid bearing to prevent an optical fiber from touching the mechanical surface of the walls. The high-pressure fluid is forced into the vicinity of the optical fiber region such that the optical fiber remains centered within the tapered-shaped side walls before entering into the coating process.

Yet another patent application EP2096628A1 discloses an acoustic levitation system comprising an emitter and a reflector. An object which is placed between the emitter and reflector is levitated due to a standing acoustic pressure wave generated by both the emitter and the reflector.

None of the prior art references disclose an efficient way to maintain a central position of the optical fiber during the fiber draw process. The prior techniques talk about levitating a large-diameter glass object against gravity using an acoustic beam that cannot be applied to a small diameter (generally between 80 to 250 microns) optical fiber.

Accordingly, to overcome the disadvantages of the prior art, there is an urgent need for a technical solution that overcomes the above-stated limitations in the prior arts by maintaining a central vertical position for an optical fiber in a draw tower without contacting the optical fiber. The present invention provides an acoustic centering apparatus to stabilize and/or center a lateral position of the optical fiber in the draw tower.

### SUMMARY OF THE INVENTION

Embodiments of the present invention relate to a method for constraining an optical fiber in a draw tower comprising steps of trapping the optical fiber along a vertical axis (Y-Y) by an arrangement of acoustic waves in the vicinity of the optical fiber. Prior to the step of trapping the optical fiber the method may include at least one substep of generating one or more first waves of the one or more acoustic waves in a first direction and/or generating one or more second waves of the one or more acoustic waves in a second direction.

Further, trapping the optical fiber involves generating an acoustic radiation pressure by one or more acoustic waves. The one or more acoustic waves trap the optical fiber for at least 3 mm vertical length of the optical fiber in the draw tower.

In accordance with an embodiment of the present invention, the movement of the optical fiber in a direction perpendicular to the vertical axis (Y-Y) is constrained within 1 milli-meter (mm) from the vertical axis (Y-Y). Moreover, the vertical axis (Y-Y) is either parallel to a draw tower axis (Y'-Y') and/or coinciding with the draw tower axis (Y'-Y').

In accordance with an embodiment of the present invention, the method involves coating of the optical fiber to generate the coated optical fiber. And, the coating ovality of a coated optical fiber is less than 4%.

In accordance with an embodiment of the present invention, the optical fiber has a diameter less than 150 micrometer. The glass density of the optical fiber lies in a range of 2.19 gram per cubic-centimeter (g/cc) to 2.20 g/cc.

Another embodiment of the present invention provides a draw tower comprising an acoustic centering apparatus adapted to generate one or more acoustic waves to trap an optical fiber in a central position along a vertical axis (Y-Y) and a coating unit adapted to coat the optical fiber to generate a coated optical fiber.

In accordance with an embodiment of the present invention, the acoustic centering apparatus is adapted to generate one or more first waves of the one or more acoustic waves in a first direction and one or more second waves of the one or more acoustic waves in a second direction that is opposite to the first direction to further generate a plurality of standing waves such that a combination of the plurality of standing waves generates an acoustic radiation pressure that traps the optical fiber in a central position along the vertical axis (Y-Y).

In accordance with an embodiment of the present invention, the acoustic centering apparatus is any of a ring-shaped acoustic centering apparatus, a concave-shaped acoustic centering apparatus and/or a rectangular-shaped acoustic centering apparatus.

The ring-shaped acoustic centring apparatus comprises a ring, at least one transducer and at least one reflector positioned along a circumference of the ring. At least one transducer is disposed opposite to the at least one reflector. Particularly, the ring-shaped acoustic centering apparatus generates an acoustic radiation pressure in a horizontal direction with respect to the draw tower to maintain the optical fiber along the vertical axis (Y-Y).

The concave-shaped acoustic centering apparatus includes first and second hemispherical shells, at least one transducer, and at least one reflector such that the at least one transducer and the at least one reflector is disposed along a surface and concurrent to a center of the first and second hemispherical shells. In particular, at least one transducer is disposed opposite to at least one reflector. Moreover, the concave shaped acoustic centering apparatus generates an acoustic radiation pressure in one of, a horizontal direction and a vertical direction with respect to the draw tower to maintain the optical fiber (along the vertical axis (Y-Y).

The rectangular-shaped acoustic centering apparatus includes first and second plates, a plurality of transducers, and a plurality of reflectors such that the plurality of transducers and the plurality of reflectors are disposed on the first and second plates that are on adjacent planes. In particular, the distance between the first and second plates is in a range of 10 cm to 30 cm, and the plurality of transducers are disposed opposite to the plurality of reflectors. Moreover, the rectangular shaped acoustic centering apparatus generates an acoustic radiation pressure in a vertical direction with respect to the draw tower to maintain the optical fiber along the vertical axis (Y-Y).

In accordance with an embodiment of the present invention, the acoustic centering apparatus may be disposed above a cooling unit. Alternatively, the acoustic centering apparatus may be disposed below a cooling unit.

The foregoing objectives of the present invention are attained by providing an apparatus for constraining an optical fiber in the draw tower and the method thereof.

### BRIEF DESCRIPTION OF THE DRAWINGS

So that the manner in which the above-recited features of the present invention is understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

The invention herein will be better understood from the following description with reference to the drawings, in which:
Fig. 1A is a block diagram illustrating a draw tower in accordance with one embodiment of the present invention;
Fig. 1B is a block diagram illustrating a draw tower in accordance with another embodiment of the present invention;
Fig. 2A is a schematic view illustrating a draw tower in accordance with one embodiment of the present invention;
Fig. 2B is a schematic view illustrating a draw tower in accordance with another embodiment of the present invention;
Fig. 2C is a schematic view illustrating an exemplary representation of one or more acoustic waves in accordance with an embodiment of the present invention;
Fig. 3 is a block diagram illustrating a control unit for an acoustic centering apparatus of the draw tower in accordance with an embodiment of the present invention;
Fig. 4 is a snapshot illustrating a ring-shaped acoustic centering apparatus in accordance with an embodiment of the present invention;
Fig. 5 is a snapshot illustrating a concave-shaped acoustic centering apparatus in accordance with an embodiment of the present invention;
Fig. 6 is a snapshot illustrating a rectangular-shaped acoustic centering apparatus in accordance with an embodiment of the present invention;
Fig. 7 is a flowchart illustrating a method for constraining an optical fiber in the draw tower in accordance with an embodiment of the present invention.

### ELEMENT LIST

Draw tower - 100, 101
Preform - 102
Optical fiber - 104
Coated optical fiber - 105
Main furnace - 106
Annealing unit - 108
Cooling unit - 110
Acoustic centering apparatus - 112
Coating unit - 114
Ultra-violet (UV) curing unit - 116
One or more annealing furnaces - 118
First annealing furnace - 118a
Second annealing furnace - 118b
Transducer holder - 120
Plurality of transducers - 122, 122a
First set of transducers - 124
Second set of transducers - 126
Plurality of reflectors - 128a - 128n
First laser micrometer - 202a
Second laser micrometer - 202b
Take up unit - 204
Chamber - 206
Upper end - 208
Lower end - 210
Inlet hole - 212
Outlet hole - 214
Funnel - 216
Rollers - 218
Coating solution - 220
Drum - 222
Control unit - 300
Control device - 302
Printed circuit board (PCB) - 304
Input/Output port - 306
Programming circuit - 308
Ring-shaped acoustic centering apparatus - 400
Ring - 402
Concave-shaped acoustic centering apparatus - 500
First hemi-spherical shell - 502a
Second hemi-spherical shell - 502b
Rectangular-shaped acoustic centering apparatus - 600
First plate - 602a
Second plate - 602b

The optical fiber and the draw tower are illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DETAILED DESCRIPTION OF THE INVENTION

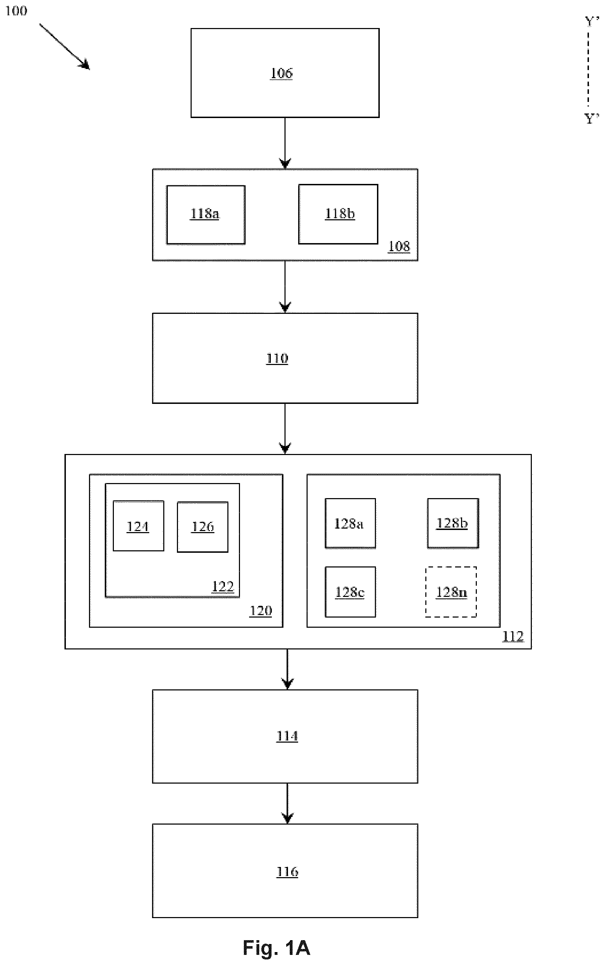

The principles of the present invention and their advantages are best understood by referring to FIGS.1A to FIGS. 7. In the following detailed description, numerous specific details are set forth in order to provide a thorough understanding of the embodiment of the invention as illustrative or exemplary embodiments of the invention, specific embodiments in which the invention may be practised are described in sufficient detail to enable those skilled in the art to practice the disclosed embodiments. However, it will be obvious to a person skilled in the art that the embodiments of the invention may be practised with or without these specific details. In other instances, well-known methods, procedures and components have not been described in detail so as not to unnecessarily obscure aspects of the embodiments of the invention.

The following detailed description is, therefore, not to be taken in a limiting sense, and the scope of the present invention is defined by the appended claims and equivalents thereof. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. References within the specification to "one embodiment," "an embodiment," "embodiments," or "one or more embodiments" are intended to indicate that a particular feature, structure, or characteristic described in connection with the embodiment is included in at least one embodiment of the present invention.

Although the terms first, second, etc. may be used herein to describe various elements, these elements should not be limited by these terms. These terms are generally only used to distinguish one element from another and do not denote any order, ranking, quantity, or importance, but rather are used to distinguish one element from another. Further, the terms "a" and "an" herein do not denote a limitation of quantity, but rather denote the presence of at least one of the referenced items.

The conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

### The following brief definition of terms shall apply throughout the present invention:

Term "optical fiber" as used herein refers to a light guide that provides high-speed data transmission. The optical fiber comprises one or more glass core regions and a glass cladding region. The light moving through the one or more glass core regions of the optical fiber relies upon the principle of total internal reflection, where the glass core region has a higher refractive index (n1) than the refractive index (n2) of the cladding region of the optical fiber.

Term "transducer" as used herein refers to a device that converts variations in a physical quantity, such as pressure, into an electrical signal, or vice-versa.

Term "standing wave" as used herein refers to two identical waves that move in opposite directions along a line such that the two identical waves form the standing wave. The standing wave does not travel through space.

Term "external disturbance" as used herein refers to the disturbances that are coming from main parts of a draw tower. The main parts of the draw tower include a cooling unit and spool winding take-up section. The optical fiber is drawn at a high speed from the draw tower, that leads to turbulence in incoming air that is entering into a cooling tube in the draw tower. The turbulence in the incoming air causes vibrations that lead to disturbances in the draw tower.

Term "acoustic radiation pressure" as used herein refers to an acoustic radiation force that is acting on an object in a sound field/acoustic field. The acoustic radiation force is the total time-averaged force on the object in the acoustic field.

Term "plurality of transducers" as used herein refers to a number of elements (plurality of phased transducers) that are pulsed in unison to direct sound waves (acoustic waves) in a specific direction.

Term "amplitude" as used herein refers to a maximum distance or distance moved by a point on an acoustic wave (vibrating wave) measured from its mean position.

Term "phase" as used herein refers to a position of a wave at a point in time (instantaneous) on a waveform cycle. In other words, Term "phase" as used herein refers to an instantaneous position of the wave on the waveform cycle.

Term "phase delay" as used herein refers to a time delay for any two transducers of the set of transducers. The time delay depends on the relative position of the two transducers of the set of transducers.

Term "coating ovality" as used herein refers to a percentage of coating by which the shape of a coating layer deviates from a circle. The coating ovality affects both transmission and strength owing to a build-up of non-uniformly distributed stresses on an optical fiber.

Term "coating concentricity error" as used herein refers to an error of an optical fiber that is the offset between the center of the two concentric circles that specify the coating of the coated optical fiber and the bare optical fiber.

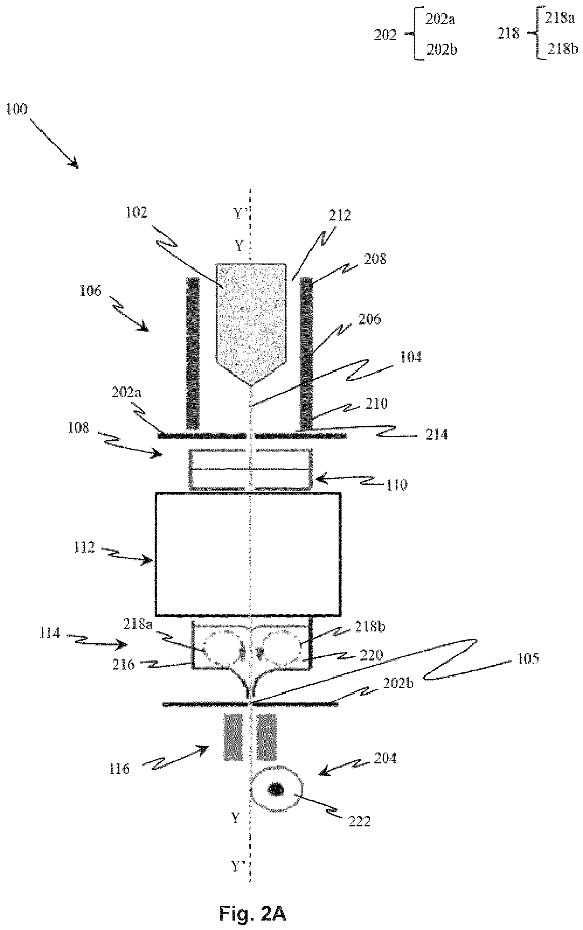

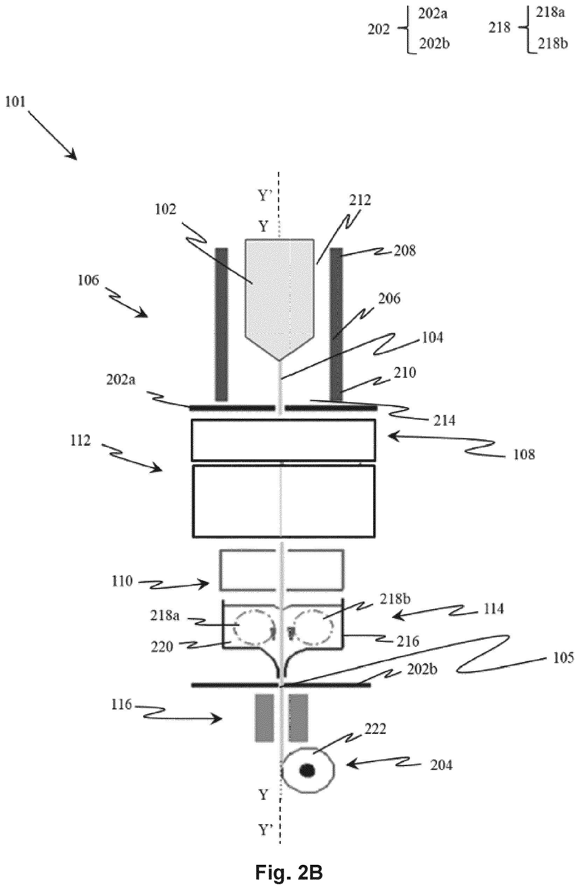

Fig. 1A is a block diagram illustrating a draw tower 100 in accordance with one embodiment of the present invention. The draw tower 100 may be adapted to receive a preform 102 (as shown later in FIG. 2A and FIG. 2B) in order to draw an optical fiber 104 (as shown later in FIG. 2A and FIG.2B) from the preform 102.

In some aspects of the present disclosure, the preform 102 may be a made up of a glass material (i.e., a glass preform) and may be a pure glass cylinder. The glass preform may be made up of very high purity (5N) chemicals, that may improve a quality of the optical fiber 104. In some aspects of the present disclosure, the preform 102 may be either a single layer preform or a multi-layer preform. In some aspects of the present disclosure, the preform 102 may be doped with a suitable dopant. The preform 102 is designed to have a desired refractive index profile for the optical fiber 104.

In some other aspects of the present disclosure, the optical fiber 104 is made up of a glass material having a density in a range between 2.19 gram per cubic-centimeter (g/cc) and 2.20 g/cc.

In accordance with an embodiment of the present disclosure, the draw tower 100 includes a main furnace 106, an annealing unit 108, a cooling unit 110, an acoustic centering apparatus 112, a coating unit 114 and an ultra-violet (UV) curing unit 116. In particular, the acoustic centering apparatus 112 may be disposed below the cooling unit 110 in the draw tower 100. Moreover, the acoustic centering apparatus 112 may have a transducer holder 120 to hold a plurality of transducers 122 (hereinafter collectively referred to and designated as "the transducers 122" and individually referred to and designated as "the transducer 122a") of which first and second set of transducers 124 and 126 are shown in Fig.1A.

The annealing unit 108 may have one or more annealing furnaces 118 of which first and second annealing furnaces 118a and 118b (hereinafter collectively referred to and designated as "the annealing furnaces 118") are shown.

Further, the draw tower 100 of Fig. 1A may extend along a draw tower axis (Y'-Y') of the draw tower 100. The optical fiber 104 may have a movement in the draw tower 100. The movement of the optical fiber 104 in the draw tower 100 is not the same in all sections (such as cooling unit 110, main furnace 106, annealing unit 108) in the draw tower 100. Some sections of the draw tower 100 may have higher amplitude range up to 1mm which can be reduced to 500 micrometers range.

In accordance with an embodiment of the present disclosure, the main furnace 106, the annealing unit 108, the cooling unit 110, the acoustic centering apparatus 112, the coating unit 114 and the UV curing unit 116 may be arranged along the draw tower axis (Y'-Y').

In accordance with an embodiment of the present disclosure, the main furnace 106 may be adapted to receive the preform 102 to heat the preform 102 such that the optical fiber 104 is drawn out from the main furnace 106. In particular, the optical fiber 104 may be a bare optical fiber (i.e., a melted optical fiber) that may be drawn out from the main furnace 106. Moreover, the main furnace 106 may be adapted to heat the preform 102 at a temperature of about 1500 - 2200 Degree Celsius (°C) to melt the preform 102. Further, the preform 102 may be melted to obtain the optical fiber 104.

In some aspects of the present disclosure, the preform 102 may be inserted into the main furnace 106 at a predefined speed (generally between 1 milimeter per minute (mmpm) to 5 mmpm). Upon insertion of the preform 102 in the main furnace 106, the preform 102 may be adequately positioned in the main furnace 106.

In an exemplary example, upon insertion of the preform 102 in the main furnace 106, the preform 102 may be attached to a top end of the main furnace 106 to hang the preform 102 at the top end of the main furnace 106.

In another embodiment of the present disclosure, the main furnace 106 may be provided with a plurality of induction coils (not shown) that may be disposed within the main furnace 106. In particular, the plurality of induction coils may be adapted to melt the preform 102.

In one aspect of the present disclosure, the main furnace 106 may be maintained at a temperature of 2200 °C to melt the preform 102. Further, the main furnace 106 may be provided with one or more inert gases (such as but not limited to Helium, Argon, Nitrogen etc). Alternatively, the preform 102 may be melted at a temperature of 1500°C.

In some aspects of the present disclosure, the optical fiber 104 may have a diameter that may be less than 150 micrometers (µm) (generally 125 µm with a tolerance of 1 µm).

In accordance with an embodiment of the present disclosure, the annealing unit 108 may be coupled to the main furnace 106. In particular, the annealing unit 108 may be disposed below the main furnace 106. Upon the optical fiber 104 being drawn out from the main furnace 106, the optical fiber 104 may be cooled in the annealing furnaces 118. Moreover, the annealing furnaces 118 may gradually cool the optical fiber 104 in one or more stages by passing the optical fiber 104 through the annealing furnaces 118. Further, the annealing furnaces 118 may bring down the temperature of the optical fiber 104 to 450°C.

In accordance with an embodiment of the present disclosure, the cooling unit 110 may be coupled to the annealing unit 108. In particular, the cooling unit 110 may be disposed below the annealing unit 108 and is adapted to cool the optical fiber 104 using one or more cooling gasses to cool the optical fiber 104. Further, one or more cooling gasses may carry away heat of the optical fiber 104 to bring down the temperature of the optical fiber 104 to 50°C. The one or more cooling gasses may include, but not limited to, Argon, Helium, and the like. Aspects of the present disclosure are intended to include and/or otherwise cover any kind of gas that is to be used in the cooling unit 110, without deviating from the scope of the present disclosure.

In accordance with an embodiment of the present disclosure, the acoustic centering apparatus 112 may be coupled to the cooling unit 110.The acoustic centering apparatus 112 may be disposed below the cooling unit 110. In particular, the acoustic centering apparatus 112 may be adapted to trap the optical fiber 104 in a central position *i*.*e*., along a vertical axis (Y-Y) (as shown later in Fig. 2A and Fig. 2B). Moreover, the vertical axis (Y-Y) may be parallel to a draw tower axis (Y'-Y') and/or coinciding with the draw tower axis (Y'-Y'). While the acoustic centering apparatus 112 traps the optical fiber 104, there may be no net force that may act on the optical fiber 104. Further, the acoustic centering apparatus 112 may be adapted to hold the optical fiber 104 at the vertical axis (Y-Y) against other external disturbances in the draw tower 100.

Although the acoustic centering apparatus 112 is disposed below the cooling unit 110 *i*.*e*., below the cooling unit 110 in the draw tower 100, it will be apparent to a person skilled in the art that the scope of the present disclosure is not limited to it. In various other aspects of the present disclosure, the acoustic centering apparatus 112 may be disposed above the cooling unit 110 in the draw tower 100 without deviating from the scope of the present disclosure. In such a scenario, the cooling unit 110 and the acoustic centering apparatus 112 are configured to serve one or more functionalities in a manner similar to the functionalities as being served by the cooling unit 110 and the acoustic centering apparatus 112 as described herein.

Alternatively in different embodiments of the present invention, the acoustic centering apparatus 112 may be disposed or placed in any position along the draw tower axis (Y'-Y') of the draw tower 100. For example, the acoustic centering apparatus 112 may be disposed below the main furnace 106. In another example, the acoustic centering apparatus 112 may be disposed below the annealing unit 108. In yet another example, the acoustic centering apparatus 112 may be disposed below the coating unit 114. In yet another example, the acoustic centering apparatus 112 may be disposed below the UV-curing unit 116.

It will be apparent to a person skilled in the art that the scope of the present disclosure that the draw tower 100 may have a number of acoustic centering apparatuses without deviating from the scope of the present disclosure. In such a scenario, each acoustic centering apparatus of the number of acoustic centering apparatuses are configured to serve one or more functionalities in a manner similar to the functionalities as being served by the acoustic centering apparatus 112 as described herein. Further, the number of acoustic centering apparatuses may be disposed throughout a running path of the optical fiber 104, while the optical fiber 104 is being drawn from the draw tower 100.

In accordance with an embodiment of the present disclosure, the acoustic centering apparatus 112 holds transducers 122 in the transducer holder 120. The transducers 122 are adapted to generate one or more acoustic waves (hereinafter interchangeably referred to as "the acoustic waves") such that the acoustic waves have a predefined amplitude and a predefined phase. In particular, the acoustic wave may further have a predefined frequency. Each of the first and second set of transducers 124 and 126 may have a number of transducers. Aspects of the present disclosure are intended to include and/or otherwise cover any number of transducers in the first and second set of transducers 124 and 126, without deviating from the scope of the present disclosure.

The first set of transducers 124 of the transducers 122 may be adapted to generate one or more first waves in a first direction. The second set of transducers 126 of the transducers 122 may be adapted to generate one or more second waves in a second direction. The one or more first and second waves may have the predefined amplitude and the predefined frequency. The acoustic centering apparatus 112 is disposed in the vicinity of the optical fiber 104 such that the one or more first and second waves (i.e., one or more acoustic waves) are generated in the vicinity of the optical fiber 104. The first direction may be opposite to the second direction such that the one or more first and second waves generate a plurality of standing waves. The plurality of standing waves may be a combination of two waves that may move in opposite directions to each other such that each of the two waves has the same amplitude and frequency. Further, the plurality of standing waves may, in combination to each other, generate an acoustic radiation pressure.

In particular, the acoustic radiation pressure may provide a strong trapping force such that the acoustic radiation pressure traps the optical fiber 104 in the central position *i*.*e*., along the vertical axis (Y-Y). Moreover, the acoustic radiation pressure may provide support to the optical fiber 104 against inherent change in an axis of the optical fiber 104 due to external disturbances in the draw tower 100. Further, the acoustic radiation pressure may be adapted to trap the optical fiber 104 in the central position without contacting the optical fiber 104. This way, the acoustic radiation pressure may maintain the optical fiber 104 in a designated position *i*.*e*., along the vertical axis (Y-Y).

In some aspects of the present disclosure, movement of the optical fiber 104 may be constrained within 1 milli-meter from the vertical axis (Y-Y). While in alternative embodiments, movement of the optical fiber 104 may not be constrained within 1 milli-meter from the vertical axis (Y-Y).

Each transducer of the transducers 122 may be, but not limited to, a bolt-clamp Langevin-type lead-zirconate-titanate transducer. Aspects of the present disclosure are intended to include and/or otherwise cover any kind of known or later developed transducer, without deviating from the scope of the present disclosure. Moreover, each transducer of the transducers 122 may have a diameter that may lie in a range between 15 millimeters (mm) and 40 mm. Aspects of the present disclosure are intended to include and/or otherwise cover any dimension for each transducer of the transducers 122, without deviating from the scope of the present disclosure. Further, each transducer of the transducers 122 may have a frequency range that may lie between 50 Kilo-hertz (kHz) and 200 kHz. Aspects of the present disclosure are intended to include and/or otherwise cover any frequency range for each transducer of the transducers 122, without deviating from the scope of the present disclosure.

In some aspects of the present disclosure, two adjacent transducers from the first and second set of transducers 124 and 126 may have a distance that may lie in a range such that a wavelength at which the optical fiber 104 oscillates is out of phase.

In accordance with an embodiment of the present disclosure, the acoustic centering apparatus 112 may have a plurality of reflectors 128a-128n (hereinafter collectively referred to and designated as "the reflectors 128" and individually referred to and designated as "the reflector 128a"). The reflectors 128 may be disposed opposite to the transducers 122. In particular, the reflectors 128 may be disposed opposite to one of, the first set of transducers 124 and the second set of transducers 126. Moreover, the reflectors 128 may be adapted to reflect one of the one or more first and second waves. Further, the reflectors 128 may have low absorptivity and may reflect the majority of the one or more first and second waves. In some examples of the present disclosure, each reflector of the reflectors 128 may be a concave mirror reflector.

In some examples of the present disclosure, each reflector of the reflectors 128 may have a diameter that may lie in a range between 15 mm and 40 mm. Preferably, each reflector of the reflectors 128 may have the diameter of 20 mm. Aspects of the present disclosure are intended to include and/or otherwise cover any dimension for each reflector of the reflectors 128, without deviating from the scope of the present disclosure. Further, each reflector of the reflectors 128 may have a focal length that may lie in a range between 15 mm and 25 mm. Preferably, each reflector of the reflectors 128 may have the focal length of 20 mm. Aspects of the present disclosure are intended to include and/or otherwise cover any value of the focal length for each reflector of the reflectors 128, without deviating from the scope of the present disclosure.

While using the reflectors 128, the acoustic centering apparatus 112 may use either the first set of transducers 124 or the second set of transducers 126. In an exemplary example, the reflectors 128 may be used at a place of the second set of transducers 126 in the acoustic centering apparatus 112. In such a scenario, the first set of transducers 124 may be adapted to generate the one or more first waves in the first direction. The first waves reflect from the reflectors 128 that may be disposed opposite to the first set of transducers 124 (*i*.*e*., at the place of the second set of transducers 126). Moreover, the reflectors 128, upon reflecting the one or more first waves may be adapted to generate a reflected version of the one or more first waves such that the reflected version of the one or more first waves may travel in the second direction.

Further, the reflected version of the one or more first waves may now act as the one or more second waves (as described hereinabove). The one or more first waves and the reflected version of the one or more first waves may have the predefined amplitude and the predefined frequency and generate the plurality of standing waves. The plurality of standing waves may generate the acoustic radiation pressure. The acoustic radiation pressure may force the optical fiber 104 in one of, a forward direction and a backward direction to align the optical fiber 104 along the vertical axis (Y-Y). Further, the acoustic radiation pressure may provide a strong trapping force such that the acoustic radiation pressure traps the optical fiber 104 in the central position *i*.*e*., along the vertical axis (Y-Y).

In another example, the reflectors 128 may be used at a place of the first set of transducers 124 in the acoustic centering apparatus 112. In such a scenario, the second set of transducers 126 may be adapted to generate the one or more second waves in the second direction. The second waves may reflect from the reflectors 128 that may be disposed opposite to the second set of transducers 126 (*i*.*e*., at the place of the first set of transducers 124). Moreover, the reflectors 128, upon reflecting the one or more second waves may be adapted to generate a reflected version of the one or more second waves such that the reflected version of the one or more second waves may travel in the first direction. Further, the reflected version of the one or more second waves may now act as the one or more first waves (as described hereinabove).

In accordance with an embodiment of the present disclosure, one or more second waves and the reflected version of the one or more second waves may have the predefined amplitude and the predefined frequency and generate the plurality of standing waves. The plurality of standing waves may generate the acoustic radiation pressure and provide the strong trapping force such that the acoustic radiation pressure traps the optical fiber 104 in the central position *i*.*e*., along the vertical axis (Y-Y). The vertical axis (Y-Y) may be parallel to the draw tower axis (Y'-Y') and/or coinciding with the draw tower axis (Y'-Y').

In some embodiments of the present disclosure, the transducers 122 may have a flat surface such that the transducers 122 may act as the reflectors 128. In such a scenario, the flat surface of the transducers 122 may reflect one of the one or more first and second waves.

In alternative embodiments of the present disclosure, a distance between the transducers 122 and the reflectors 128 may lie in a range between 50 mm and 200 mm. Aspects of the present disclosure are intended to include and/or otherwise cover any value for the distance between the transducers 122 and the reflectors 128, without deviating from the scope of the present disclosure.

In accordance with an embodiment of the present disclosure, the coating unit 114 may be coupled to the acoustic centering apparatus 112. In particular, the coating unit 114 may be disposed of but not limited to below the acoustic centering apparatus 112. The coating unit 114 may be adapted to apply one or more coating layers (hereinafter referred to as "the coating layers") to generate a coated optical fiber 105. In particular, the coating layers may protect the coated optical fiber 105 such that the coating layers maintain mechanical characteristics and improve optical performance. Further, the coating layers may be primary and secondary coatings that may be applied on the optical fiber 104 to form the coated optical fiber 105. The primary coating may have a coating concentricity value that may be less than 20 micrometers. In some aspects of the present disclosure, the secondary coating may have a coating concentricity value that may be less than 12 micrometers.

In some aspects of the present disclosure, each coating layer of the coating layers may have a coating ovality that may be less than 4%.

In alternative aspects of the present disclosure, the coating layers may have two layers *i*.*e*., an inner layer and an outer layer. The inner layer may be a soft layer that may adhere to the optical fiber 104. The outer layer may be a hard layer that may surround the inner layer. The coating unit 114 may therefore apply and cure two different separate resins that may result in the inner and outer coatings.

In accordance with an embodiment of the present disclosure, the UV curing unit 116 may be coupled to the coating unit 114. The UV curing unit 116 may be disposed below the coating unit 114. In particular, the UV curing unit 116 may be adapted to cure the coated optical fiber 105. Moreover, the UVcuring unit 116 may provide protection, flexibility, and strength to the coated optical fiber 105. Further, the UV curing unit 116, by way of ultraviolet inks (hereinafter referred to as "the UV inks") may provide color code to the coated optical fiber 105 and may protect the coated optical fiber 105 against decomposition caused by gels of an optical cable, specifically while manufacturing of multi-fiber optical cables.

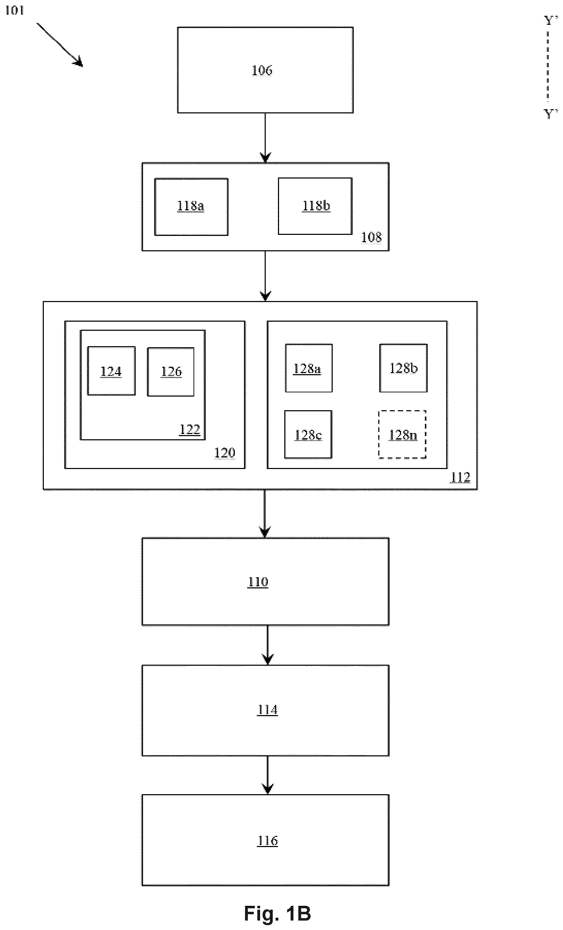

Fig. 1B is a block diagram illustrating the draw tower in accordance with another embodiment of the present invention. In particular, the draw tower 101 may be substantially similar to the draw tower 100 with similar elements referred with similar reference numerals. But, the acoustic centering apparatus 112 in the draw tower 101 is disposed above the cooling unit 110 in the draw tower 101. In particular, when the acoustic centering apparatus 112 in the draw tower 101 is disposed above the cooling unit 110, the optical fiber 104 may be prevented from getting in contact with walls of the cooling unit 110. Moreover, the optical fiber 104 may go through a glass abrasion phenomena when the optical fiber 104 touches the walls of the cooling unit 110. Further, when the optical fiber 104 touches the walls of the cooling unit, the quality of drawn optical fiber may be degraded till a longer length that may lead to increased optical fiber wastage. Thus, the draw tower 101 may be configured to serve one or more functionalities in a manner similar to the functionalities as being served by the draw tower 100.

Fig. 2A and Fig. 2B are schematic views illustrating a draw tower (100 and 101) in accordance with one or more embodiments of the present invention. In particular, the draw tower 100 includes a first and second laser micrometers 202a and 202b (hereinafter collectively referred to and designated as "the laser micrometers 202") and a take up unit 204. Moreover, the laser micrometers 202 and the take up unit 204 may be arranged along the draw tower axis (Y'-Y') of the draw tower 100. The draw tower 100 may further have a capstan (not shown) and a dancer pulley (not shown) that may be placed before the take up unit 204.

In accordance with an embodiment of the present disclosure, the main furnace 106 may have a chamber 206 with an upper end 208, a lower end 210, an inlet hole 212, and an outlet hole 214. The inlet hole 212 may be disposed of at the upper end 208 and the outlet hole 214 may be disposed of at the lower end 210. Moreover, the inlet and outlet holes 212 and 214 may be provided with an iris frame (not shown) to allow an operator to control flow of the one or more inert gasses in the main furnace 106. Further, the chamber 206 may be adapted to receive the preform 102 from the inlet hole 212.

The inlet and outlet holes 212 and 214 may have a cylindrical shape. Aspects of the present disclosure are intended to include and/or otherwise cover any shape for the inlet and outlet holes 212 and 214, without deviating from the scope of the present disclosure.

The first laser micrometer 202a may be disposed beneath the main furnace 106 and second laser micrometer 202b may be disposed beneath the coating unit 114. In particular, the laser micrometers 202 may be adapted to conduct non-contact inspection of the optical fiber 104 and the coated optical fiber 105. Moreover, the laser micrometers 202 may allow measurement of a physical property of the optical fiber 104 and the coated optical fiber 105, including but not limited to, such as one or more dimensions, a shape, and a uniformity of the optical fiber 104 and the coated optical fiber 105. Aspects of the present disclosure are intended to include and/or otherwise cover any other physical property that is being measured by the laser micrometers 202, and cover any number of laser micrometers (*i*.*e*., 2, 3, 4, 5), without deviating from the scope of the present disclosure.

In accordance with an embodiment of the present disclosure, the coating unit 114 may have a funnel 216, a pair of rollers 218 (hereinafter collectively referred to and designated as "the rollers 218") of which first and second rollers 218a and 218b are shown. The rollers 218 may be disposed within the funnel 216 such that the rollers 218 rotate within the funnel 216. The funnel 216 may hold a coating solution 220 such that the rollers 218 are immersed in the coating solution 220. The coating solution 220 may facilitate the coating unit 114 to apply the coating layers on the optical fiber 104 to generate the coated optical fiber 105. Specifically, the rollers 218, upon rotation, may be adapted to apply the coating layers on the optical fiber 104 to generate the coated optical fiber 105. Aspects of the present disclosure are intended to include and/or otherwise cover any number of rollers (*i*.*e*., 2, 3, 4, 5, 6), without deviating from the scope of the present disclosure.

In accordance with an embodiment of the present disclosure, the take up unit 204 (*i*.*e*., take up spool) may be coupled to the UV curing unit 116. In particular, the take up unit 204 may be disposed below the UV curing unit 116. The take up unit 204 may have a drum 222 that may be a motorized drum such that a motor (not shown) may be adapted to rotate the drum 222. Upon rotation of the drum 222, the coated optical fiber 105 may be wrapped around the drum 222. Moreover, upon rotation of the drum 222, the coated optical fiber 105 may be wrapped around the drum 222.

In accordance with an alternative embodiment of the present disclosure as shown in Fig. 2B, the draw tower 101 may be substantially similar to the draw tower 100 with similar elements referred with similar reference numerals. However, the acoustic centering apparatus 112 in the draw tower 101 is disposed above the cooling unit 110 in the draw tower 101. Further, the draw tower 101 may be configured to serve one or more functionalities in a manner similar to the functionalities as being served by the draw tower 100 as described herein.

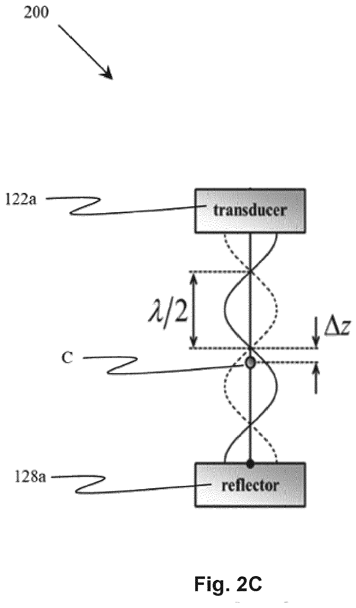

Fig. 2C is a schematic view illustrating an exemplary representation of one or more acoustic waves in accordance with an embodiment of the present invention. In particular, the transducer 122a may be disposed opposite to the reflector 128a and may be adapted to generate the acoustic waves that may be reflected from the reflector 128a. Moreover, the reflector 128a may be adapted to provide reflected versions of the acoustic waves having the wavelength (λ). The optical fiber 104 may have a center (C). And, the center (C) of the optical fiber 104 may be shifted by a distance (ΔZ) (generally less than 1000 µm) from the vertical axis (Y-Y). Moreover, the optical fiber 104 may exhibit one or more inherent vibrations that may be anchored in the acoustic waves, thereby preventing a lateral motion of the optical fiber 104. The acoustic waves may therefore ensure centring of the optical fiber 104 along the vertical axis (Y-Y).

Further, the one or more acoustic waves may trap the optical fiber 104 for at least 3 mm vertical length of the optical fiber 104 in the draw tower 100 and 101. Particularly, the one or more acoustic waves may trap the optical fiber 104 between 3 mm to 10 mm vertical length of the optical fiber 104 in the draw tower 100 and 101. Further, the vertical length of the optical fiber 104 that may be trapped by the one or more acoustic waves depends on a beam spread of the transducers 122 (i.e., an aperture of the transducers 122).

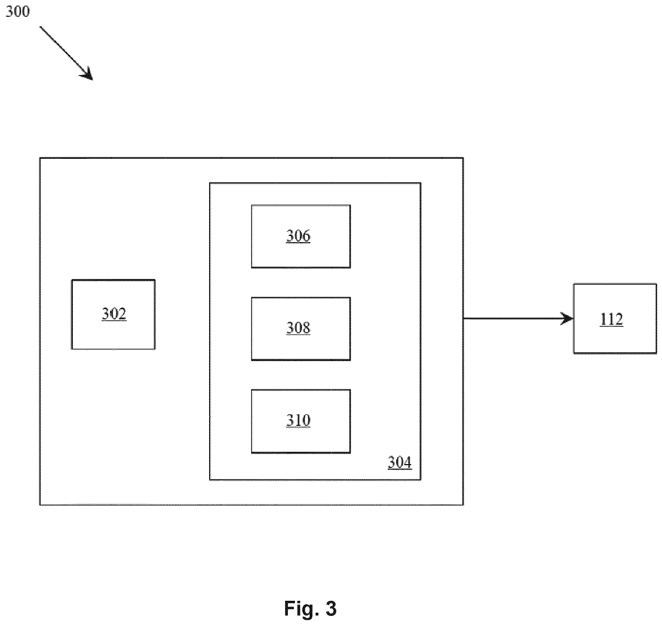

Fig. 3 is a block diagram illustrating a control unit for an acoustic centering apparatus of the draw tower in accordance with an embodiment of the present invention. In particular, the control unit 300 may be coupled via any transmission medium to the acoustic centering apparatus 112 to control the transducers 122 of the acoustic centering apparatus 112. Moreover, the control unit 300 may be adapted to one of, activate and deactivate one or more transducers of the transducers 122. Further, the control unit 300 may further be adapted to one of, activate and deactivate the reflectors 128. The one or more transducers of the transducers 122, upon activation may generate the acoustic waves and the one or more transducers of the transducers 122, upon deactivation may not generate the acoustic waves.

In accordance with an embodiment of the present disclosure, the control unit 300 includes a control device 302 and a printed circuit board (PCB) 304. In particular, the PCB 304 may have an input/output port 306 (hereinafter referred to and designated as "the I/O port 306"), a programming circuit 308, and a driver circuit 310.

The programming circuit 308 may be any or a combination of microprocessor, microcontroller, Arduino Uno, At mega 328, Raspberry Pi or other similar processing unit, and the like. In yet another embodiment, the programming circuit 308 may include one or more processors coupled with a memory (not shown) such that the memory storing computer-readable instructions executable by the one or more processors. Alternatively, the programming circuit 308 may be implemented as one or more microprocessors, microcomputers, microcontrollers, digital signal processors, central processing units, logic circuitries, and/or any devices that manipulate data based on operational instructions stored in a memory. The computer-readable instructions or routines stored in the memory may be fetched and executed to create or share the data units over a network service. The memory may include any non-transitory storage device including, for example, volatile memory such as RAM, or non-volatile memory such as EPROM, flash memory, and the like.

Further, the programming circuit 308 may be implemented as a combination of hardware and programming (for example, programmable instructions) to implement one or more functionalities of the programming circuit 308. In examples described herein, such combinations of hardware and programming may be implemented in several different ways. For example, the programming for the programming circuit 308 may be processor executable instructions stored on a non-transitory machine-readable storage medium and the hardware for the programming circuit 308 may include a processing resource (for example, one or more processors), to execute such instructions.

In the present examples, the machine-readable storage medium may store instructions that, when executed by the processing resource, implement the programming circuit 308. In such examples, the programming circuit 308 may include the machine-readable storage medium storing the instructions and the processing resource to execute the instructions, or the machine-readable storage medium may be separate but accessible to the programming circuit 308 and the processing resource. In other examples, the programming circuit 308 may be implemented by an electronic circuitry.

In accordance with an embodiment of the present disclosure, the control device 302 may facilitate the operator to enter a coordinate point (hereinafter referred to and designated as 'the coordinates') of the one or more transducers of the transducers 122. In particular, to control the one or more transducers of the transducers 122, the operator may enter the coordinates of the one or more transducers of the transducers 122. Moreover, the one or more transducers of the transducers 122 may be controlled to control the predefined amplitude and the predefined phase of the acoustic wave. Further, the one or more transducers of the transducers 122 may be one of, activated and deactivated to independently control the predefined amplitude and the predefined phase of the acoustic wave.

The one or more transducers of the transducers 122 may upon one of, activation and deactivation, undergo a phase delay. The one or more transducers of the transducers 122 may upon one of, activation and deactivation, cause delay in the predefined phase of the acoustic wave that may control the predefined amplitude and the predefined phase of the acoustic wave. In some preferred examples, the one or more transducers of the transducers 122 may be one of, activated and deactivated at different intervals of time to control the predefined amplitude and the predefined phase of the acoustic wave. By independently controlling the predefined amplitude and the predefined phase of the acoustic wave, the predefined frequency of the acoustic wave may be controlled. By controlling the predefined frequency of the acoustic wave, the acoustic radiation pressure may be varied such that no net force acts on the optical fiber 104 and the optical fiber 104 is maintained along the vertical axis (Y-Y).

In accordance with an embodiment of the present disclosure, the predefined amplitude and the predefined phase may be independently controlled by changing the relative position of the one or more transducers of the transducers 122. However, upon disposing the acoustic centering apparatus 112 in the draw tower 100 and 101, to change the relative position of the one or more transducers of the transducers 122 may not be viable. Therefore, upon disposing the acoustic centering apparatus 112 in the draw tower 100 and 101, the predefined amplitude and the predefined phase of the acoustic wave may be controlled by activating and deactivating the one or more transducers of the transducers 122.

In accordance with an embodiment of the present disclosure, the control device 302 may be coupled to the PCB 304. The I/O port 306 may facilitate the control device 302 to couple to the PCB 304 through a network interface (not shown). The I/O port 306 is the medium to send data from internal logic to external sources and receive data from external sources. The programming circuit 308 may be a Field Programmable Gate Array (FPGA) that may be an integrated circuit. The FPGA is an IC that may be programmed to perform a customized operation for a specific application. The FPGA provides better performance than a general CPU as they are capable of handling parallel processing. The programming circuit 308 may, upon the operator entering the coordinates of the one or more transducers of the transducers 122, may generate one of, an activation and deactivation signal. The activation signal may activate the one or more transducers of the transducers 122. The deactivation signal may deactivate the one or more transducers of the transducers 122.

The driver circuit 310 may, upon generation of the activation signal and the deactivation signal, activate and deactivate the one or more transducers of the transducers 122. Particularly, the driver circuit 310, upon generation of the activation signal, may transmit the activation signal to the one or more transducers of the transducers 122 to activate the one or more transducers of the transducers 122. Further, the driver circuit 310, upon generation of the deactivation signal, may transmit the deactivation signal to the one or more transducers of the transducers 122 to deactivate the one or more transducers of the transducers 122.

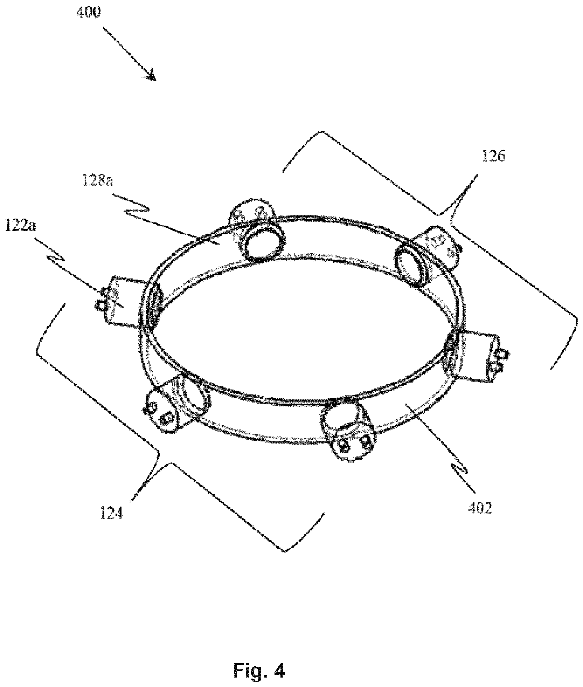

Fig. 4 is a snapshot illustrating a ring-shaped acoustic centering apparatus in accordance with an embodiment of the present invention. The ring-shaped acoustic centering apparatus 400 (hereinafter referred to and designated as "the ring-shaped ACA 400") may be substantially similar to the acoustic centering apparatus 112 with similar elements referred with similar reference numerals. However, the ring-shaped ACA 400 may have a ring 402 (*i*.*e*., the transducer holder 120) of the acoustic centering apparatus 112.

In particular, the ring 402 may be adapted to hold the transducers 122 and the reflectors 128 such that the transducers 122 are disposed opposite to the reflectors 128. In other words, the transducers 122 and the reflectors 128 may be disposed of in the form of the ring 402. Moreover, one portion of the ring 402 may be adapted to hold the first set of transducers 124 and another portion of the ring 402 may be adapted to hold the second set of transducers 126. Further, the ring-shaped ACA 400 may be disposed anywhere in the draw tower 100 and 101. The ring 402 of the ring-shaped ACA 400 consumes less space in the draw tower 100 and 101.

In order to generate the plurality of standing waves, the first and second set of transducers 124 and 126 are adapted to generate the one or more first and second waves. The plurality of standing waves may further generate the acoustic radiation pressure. Specifically, the ring-shaped ACA 400 may be adapted to generate the acoustic radiation pressure in a horizontal direction with respect to the draw tower 100 and 101 *i.e.,* a direction perpendicular to the vertical axis (Y-Y) to maintain the optical fiber 104 along the vertical axis (Y-Y).

The acoustic radiation pressure may force the optical fiber 104 to move in one direction either the forward direction or the backward direction to align the optical fiber 104 along the vertical axis (Y-Y). The acoustic radiation pressure may provide the strong trapping force such that the acoustic radiation pressure traps the optical fiber 104 in the central position i.e., along the vertical axis (Y-Y).

In accordance with an embodiment of the present disclosure, the ring-shaped ACA 400 may have the transducer 122a and the reflector 128a that are positioned along a circumference of the ring 402 of the ring-shaped ACA 400. The transducer 122a may be disposed opposite to the reflector 128a. The ring-shaped ACA 400 may have two adjacent transducers 122a such that a distance between the two adjacent transducers 122a may be defined by an equation where, R is radius of ring 402, and n is number if transducers 122a.

Further, to generate the plurality of standing waves, the one or more first and second waves may be reflected back by the reflectors 128 to generate the reflected versions of the one or more first and second waves, respectively. The one or more first and second waves and the reflected versions of the one or more first and second waves may together generate the plurality of standing waves.

The ring 402 may have a diameter that may lie in a range between 50 mm and 200 mm. Aspects of the present disclosure are intended to include and/or otherwise cover any value for the diameter of the ring 402, and any number of ring-shaped ACAs (*i*.*e*., 2, 3, 4, 5, 6) to be used in the draw tower 100 and 101 without deviating from the scope of the present disclosure. In such a scenario, the number of ring-shaped ACAs may be stacked one above the other to form a multiple ring structure.

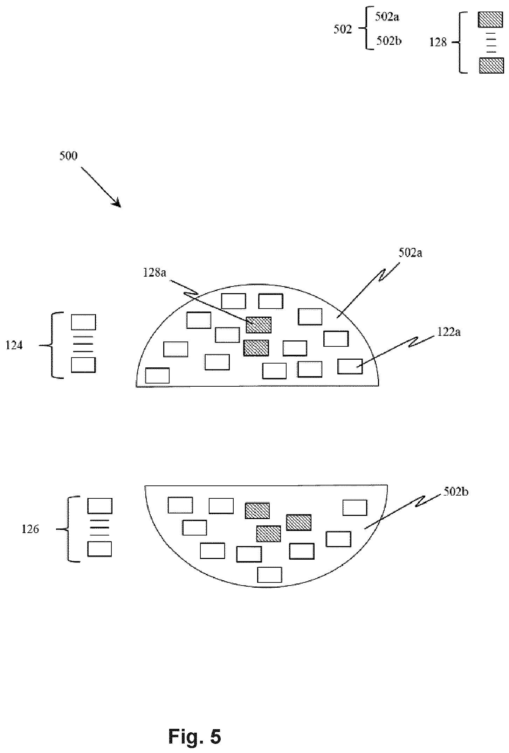

Fig. 5 is a snapshot illustrating a concave-shaped acoustic centering apparatus in accordance with an embodiment of the present invention. The concave-shaped acoustic centering apparatus 500 (hereinafter referred to and designated as "the concave-shaped ACA 500") may be substantially similar to the acoustic centering apparatus 112 with similar elements referred with similar reference numerals. However, the concave-shaped ACA 500 may have first and second hemi-spherical shells 502a and 502b (hereinafter collectively referred to and designated as "the shells 502" and individually referred to and designated as "the first shell 502a" and "the second shell 502b") in place of the transducer holder 120 of the acoustic centering apparatus 112. The shells 502 may be disposed opposite to each other.

The transducers 122 and the reflectors 128 may be disposed in the shells 502 such that the transducers 122 are disposed opposite to the reflectors 128. Alternatively, the transducers 122 and the reflectors 128 may be disposed concurrently to a center of the shells 502. In particular, the first set of transducers 124 may be disposed in the first shell 502a and the second set of transducers 126 may be disposed in the second shell 502b such that the first and second set of transducers 124 and 126 may be disposed opposite to each other.

The concave-shaped ACA 500 may be disposed anywhere in the draw tower 100 and 101. To generate the plurality of standing waves, the first and second set of transducers 124 and 126 may be adapted to generate the one or more first and second waves. The plurality of standing waves may further generate the acoustic radiation pressure. Moreover, the concave-shaped ACA 500 may be adapted to generate the acoustic radiation pressure in one of, the horizontal direction and a vertical direction with respect to the draw tower 100 and 101 *i*.*e*., the direction perpendicular to the vertical axis (Y-Y) and a direction along the vertical axis (Y-Y), respectively to maintain the optical fiber 104 along the vertical axis (Y-Y). The acoustic radiation pressure may force the optical fiber 104 to move in one direction, the forward direction and the backward direction to align the optical fiber 104 along the vertical axis (Y-Y). Further, the acoustic radiation pressure may provide the strong trapping force such that the acoustic radiation pressure traps the optical fiber 104 in the central position *i*.*e*., along the vertical axis (Y-Y).

In accordance with an alternative embodiment of the present disclosure, the concave-shaped acoustic ACA 500 may have the transducer 122a and the reflector 128a disposed along a surface of the first and second shells 502a and 502b. Alternatively, the transducer 122a may be disposed opposite to the reflector 128a. Further in yet alternative embodiment, the transducer 122a and the reflector 128 may be concurrent to the center of the shells 502.

To generate the plurality of standing waves, by way of the concave-shaped ACA 500, the one or more first and second waves may be reflected back by the reflectors 128 to generate the reflected versions of the one or more first and second waves, respectively. The one or more first and second waves and the reflected versions of the one or more first and second waves may together generate the plurality of standing waves.

In some aspects of the present disclosure, a distance between the first and second shells 502a and 502b may lie in a range between 10 centimeters (cm) and 30 cm. Aspects of the present disclosure are intended to include and/or otherwise cover any value for the distance between the first and second shells 502a and 502b and cover any number of concave-shaped ACAs (*i*.*e*., 2, 3, 4, 5, 6) to be used in the draw tower 100 and 101 without deviating from the scope of the present disclosure.

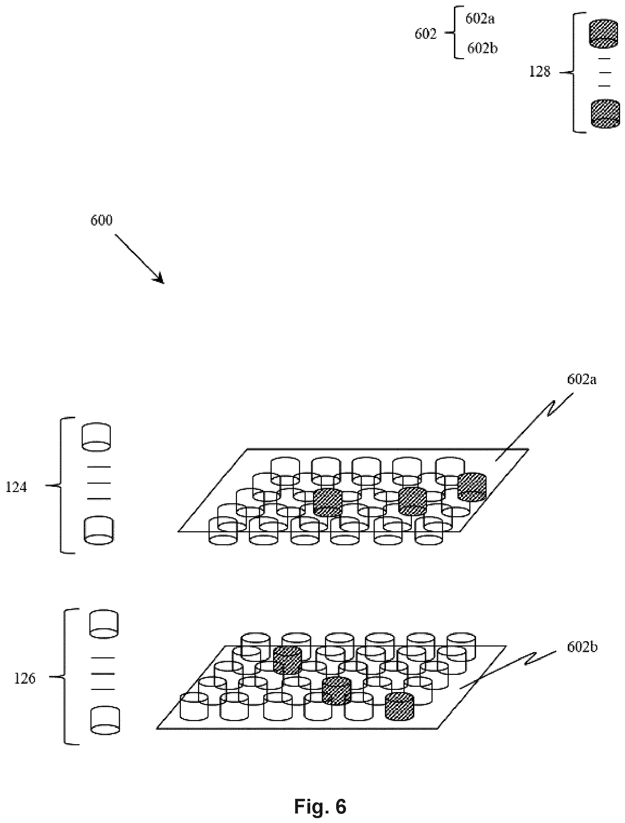

Fig. 6 is a snapshot illustrating a rectangular-shaped acoustic centering apparatus in accordance with an embodiment of the present invention. The rectangular-shaped acoustic centering apparatus 600 (hereinafter referred to and designated as "the rectangular-shaped ACA 600") may be substantially similar to the acoustic centering apparatus 112 with similar elements referred with similar reference numerals. However, the rectangular-shaped ACA 600 may have first and second plates 602a and 602b (hereinafter collectively referred to and designated as "the plates 602") in place of the transducer holder 120 of the acoustic centering apparatus 112.

In accordance with an alternative embodiment of the present disclosure, the plates 602 may be disposed opposite to each other. The transducers 122 and the reflectors 128 may be disposed on the plates 602. Or transducers 122 may be disposed concurrently to a center of the first and second plates 602a and 602b. In particular, the first set of transducers 124 may be disposed on the first plate 602a and the second set of transducers 126 may be disposed on the second plate 602b such that the first and second set of transducers 124 and 126 may be disposed opposite to each other.

The rectangular-shaped ACA 600 may be disposed anywhere in the draw tower 100 and 101 to generate the plurality of standing waves, the first and second set of transducers 124 and 126 may be adapted to generate the one or more first and second waves. The plurality of standing waves may further generate the acoustic radiation pressure. In particular, the rectangular-shaped ACA 600 may be adapted to generate the acoustic radiation pressure in the vertical direction with respect to the draw tower 100 and 101 *i*.*e*., the direction along the vertical axis (Y-Y) to maintain the optical fiber 104 along the vertical axis (Y-Y). Moreover, the acoustic radiation pressure may force the optical fiber 104 to move in one of the forward direction and the backward direction to align the optical fiber 104 along the vertical axis (Y-Y). Further, the acoustic radiation pressure may provide the strong trapping force such that the acoustic radiation pressure traps the optical fiber 104 in the central position *i*.*e*., along the vertical axis (Y-Y).

In accordance with an alternative embodiment of the present disclosure, the transducers 122 and the reflectors 128 are disposed on the first and second plates 602a and 602b such that the first and second plates 602a and 602b lie on adjacent planes. In particular, the adjacent planes may be opposite to each other such that the transducers 122 are opposite to the reflectors 128.

In some aspects of the present disclosure, the rectangular-shaped ACA 600 may be oriented in the vertical direction with respect to the draw tower 100 and 101.

In accordance with an alternative embodiment of the present disclosure, to generate the plurality of standing waves, by way of the rectangular-shaped ACA 600, the one or more first and second waves may be reflected back by the reflectors 128 to generate the reflected versions of the one or more first and second waves, respectively. The one or more first and second waves and the reflected versions of the one or more first and second waves may together generate the plurality of standing waves.

In some aspects of the present disclosure, a distance between the first and second plates 602a and 602b may lie in a range between 10 centimeters (cm) and 30 cm.

In some aspects of the present disclosure, at least two transducers of the first set of transducers 124 may be disposed in a single plane to superimpose with a counter transducer on the same plane.

The rectangular-shaped ACA 600 may have a reflector plate (not shown) in place of one of, the first and second plate 602a and 602b.

In an exemplary example, the reflector plate may be replaced with the first plate 602a such that the reflector plate is disposed opposite to the second plate 602b. The second set of transducers 126 of the second plate 602b may be adapted to generate the one or more second waves such that the one or more second waves reflect from the reflector plate. The reflector plate may be adapted to generate the reflected version of the one or more second waves such that the one or more second waves and the reflected version of the one or more second waves generate the plurality of standing waves. The plurality of standing waves may further generate the acoustic radiation pressure to maintain the optical fiber 104 along the vertical axis (Y-Y).

In another example, the reflector plate may be replaced with the second plate 602b such that the reflector plate is disposed opposite to the first plate 602a. The first set of transducers 124 of the first plate 602a may be adapted to generate the one or more first waves such that the one or more first waves reflect from the reflector plate. The reflector plate may be adapted to generate the reflected version of the one or more first waves such that the one or more first waves and the reflected version of the one or more first waves generate the plurality of standing waves. The plurality of standing waves may further generate the acoustic radiation pressure to maintain the optical fiber 104 along the vertical axis (Y-Y).

In accordance with an alternative embodiment of the present disclosure, the ring-shaped ACA 400 may have a smaller number of transducers when compared with the concave-shaped ACA 500 and the rectangular-shaped ACA 600, therefore, the ring-shaped ACA 400 is easy to calibrate.

Aspects of the present disclosure cover any number of rectangular-shaped ACAs (*i*.*e*., 2, 3, 4, 5, 6) to be used in the draw tower 100 and 101 without deviating from the scope of the present disclosure.

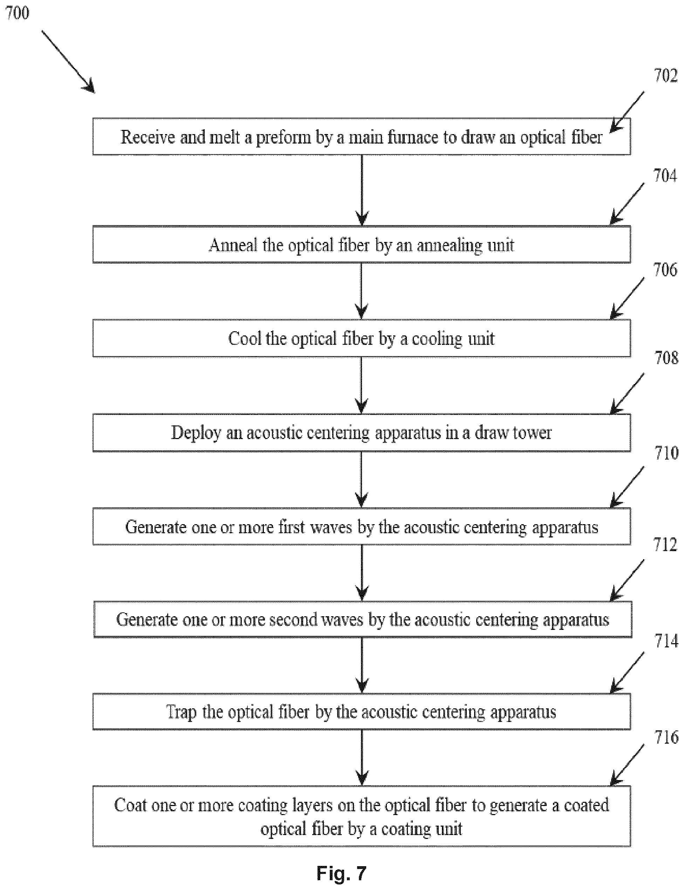

Fig. 7 is a flowchart illustrating a method for constraining an optical fiber in the draw tower in accordance with an embodiment of the present invention. The method 700 may include following steps to constrain the optical fiber 104 in the draw tower 100 and 101.

At step 702, the draw tower 100 and 101, by way of the main furnace 106, may be adapted to receive the preform 102 and melt the preform 102 such that the optical fiber 104 is drawn out from the main furnace 106. In particular, the optical fiber 104 may be the bare optical fiber that may be drawn out from the main furnace 106. The main furnace 106 may be adapted to heat the preform 102 at the temperature of about 2000°C to melt the preform 102. Moreover, the preform 102 may be melted to obtain the optical fiber 104 from the preform 102 hung at the top end of the main furnace 106. Further, the preform 102 may be inserted into the main furnace 106 at the predefined speed and adequately positioned while being feeding to the main furnace 106. Aspects of the present disclosure are intended to include and/or otherwise cover any value for the temperature to melt the preform 102, without deviating from the scope of the present disclosure.

The main furnace 106 may be provided with the plurality of induction coils (not shown) that may be disposed within the main furnace 106 and adapted to melt the preform 102. Particularly, the main furnace 106 may be maintained at the temperature of 2200°C to melt the preform 102 and provided with one or more inert gases such as but not limited to, argon, helium, nitrogen and the like. Alternatively, the preform 102 may be melted at the temperature of 1500°C The optical fiber 104 may have diameter that may be less than 150 micrometers (µm).

At step 704, the draw tower 100 and 101, by way of the annealing unit 108, may be adapted to anneal (slowly cool) the optical fiber 104. The annealing furnaces 118, upon the optical fiber 104 being drawn out from the main furnace 106, may be adapted to gradually cool the optical fiber 104 in one or more stages by passing the optical fiber 104 through the annealing furnaces 118. Further, the annealing furnaces 118 may bring the temperature of the optical fiber 104 to 450°C.

At step 706, the draw tower 100 and 101, by way of the cooling unit 110, may use one or more cooling gases to cool the optical fiber 104. Specifically, one or more cooling gases may carry away heat of the optical fiber 104 to bring the temperature of the optical fiber 104 to 50°C.

At step 708, the acoustic centering apparatus 112 deployed in the draw tower 100 and 101 or in the vicinity of the optical fiber 104 such that the one or more first and second waves are generated in the vicinity of the optical fiber 104. The acoustic centering apparatus 112 may be deployed one of, above the cooling unit 110 and below the cooling unit 110.

At step 710, the draw tower 100 and 101, by way of the acoustic centering apparatus 112, may be adapted to generate the one or more first waves in the first direction. In particular, the first set of transducers 124 of the transducers 122 are adapted to generate the one or more first waves in the first direction.

At step 712, the draw tower 100 and 101, by way of the acoustic centering apparatus 112, are adapted to generate the one or more second waves in the second direction. In particular, the second set of transducers 126 of the transducers 122 may be adapted to generate the one or more second waves in the second direction. The one or more first and second waves may have the predefined amplitude and the predefined frequency. The first direction may be opposite to the second direction such that the one or more first and second waves generate the plurality of standing waves. The plurality of standing waves may in combination to each other, generate an acoustic radiation pressure.

The acoustic radiation pressure may provide a strong trapping force such that the acoustic radiation pressure traps the optical fiber 104 in the central position *i*.*e*., along the vertical axis (Y-Y). The acoustic radiation pressure may provide support to the optical fiber 104 against inherent change in an axis of the optical fiber 104 due to external disturbances in the draw tower 100. The acoustic radiation pressure may be adapted to trap the optical fiber 104 in the central position without contacting the optical fiber 104. This way, the acoustic radiation pressure may maintain the optical fiber 104 in a designated position *i*.*e*., along the vertical axis (Y-Y). The vertical axis (Y-Y) may be parallel to the draw tower axis (Y'-Y') and/or coinciding with the draw tower axis (Y'-Y').

At step 714, the draw tower 100 and 101, by way of the acoustic centering apparatus 112, may be adapted to trap the optical fiber 104 in the central position *i*.*e*., along the vertical axis (Y-Y) of the draw tower 100. The optical fiber 104 may be trapped by the acoustic radiation pressure that may be generated by the transducers 122. While the acoustic centering apparatus 112 traps the optical fiber 104, there may be no net force that may act on the optical fiber 104. The acoustic centering apparatus 112 may be adapted to hold the optical fiber 104 at the vertical axis (Y-Y) against other external disturbances in the draw tower 100.

In some aspects of the present disclosure, movement of the optical fiber 104 may be constrained within 1 milli-meter from the vertical axis (Y-Y).

At step 716, the draw tower 100 and 101, by way of the coating unit 114, coating layers are applied on the optical fiber 104 to generate the coated optical fiber 105. The coating layers may protect the coated optical fiber 105 such that the coating layers maintain mechanical characteristics and improve optical performance. The coating layers may be primary and secondary coatings that may be applied on the optical fiber 104 to generate the coated optical fiber 105. The primary coating may have a coating concentricity value that may be less than 20 micrometers and the secondary coating may have the coating concentricity value that may be less than 12 micrometers. In some aspects of the present disclosure, each coating layer of the coating layers may have a coating ovality that may be less than 4%. In some aspects of the present disclosure, the secondary coating may be a colored secondary coating.

Thus, the acoustic centering apparatus 112 minimizes physical damage to the optical fiber 104 by non-contact stabilization of the optical fiber 104 along the vertical axis (Y-Y). The non-contact stabilization (entrapment) of the optical fiber 104 along the vertical axis (Y-Y) avoids touching the optical fiber 104 to any wall of the draw tower 100 and 101, that subsequently reduces optical fiber scrap. The acoustic centering apparatus 112 further improves the coating concentricity. The acoustic centering apparatus 112 improves dimensional quality such as thickness, concentricity, and geometric (ovality) of the optical fiber 104.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

## Claims

1. A method (700) for constraining an optical fiber (104) in a draw tower (100, 101), wherein the method (700) comprising steps of:
trapping (714) the optical fiber (104) along a vertical axis (Y-Y) by an arrangement of a one or more acoustic waves in the vicinity of the optical fiber (104),
wherein the vertical axis (Y-Y) is either parallel to a draw tower axis (Y'-Y') and/or coinciding with the draw tower axis (Y'-Y');
wherein movement of the optical fiber (104) is constrained within 1 milli-meter from the vertical axis (Y-Y); and
wherein a coating ovality of a coated optical fiber (105) is less than 4%.

2. The method (700) as claimed in claim 1, wherein the step of trapping the optical fiber (104) involves generating an acoustic radiation pressure by the one or more acoustic waves.

3. The method (700) as claimed in claim 2, wherein the one or more acoustic waves traps the optical fiber (104) for at least 3 mm vertical length of the optical fiber (104) in the draw tower (100, 101).

4. The method (700) as claimed in claim 1, wherein prior to the trapping (714) of the optical fiber (104), the method (700) comprises, at least one of:
generating (710), by way of an acoustic centering apparatus (112), one or more first waves of the one or more acoustic waves in a first direction; and
generating (712), by way of the acoustic centering apparatus (112), one or more second waves of the one or more acoustic waves in a second direction that is opposite to the first direction to generate a plurality of standing waves;
wherein a combination of the plurality of standing waves generates the acoustic radiation pressure for trapping the optical fiber (104) in a central position along the vertical axis (Y-Y).

5. The method (700) as claimed in claim 1, wherein the method comprises coating (716) the optical fiber (104) to generate the coated optical fiber (105).

6. The method (700) as claimed in claim 1, wherein the optical fiber (104) has a diameter less than 150 micrometer.

7. The method (700) as claimed claim 1, wherein a glass density of the optical fiber (104) lies in a range of 2.19 gram per cubic-centimeter (g/cc) to 2.20 g/cc.

8. A draw tower (100, 101) comprising:
an acoustic centering apparatus (112) adapted to generate one or more acoustic waves to trap an optical fiber (104) in a central position along a vertical axis (Y-Y);
wherein movement of the optical fiber (104) is in a direction perpendicular to the vertical axis (Y-Y) and is constrained within 1 milli-meter (mm) from the vertical axis (Y-Y),
wherein the vertical axis (Y-Y) is either parallel to a draw tower axis (Y'-Y') and/or coinciding with the draw tower axis (Y'-Y'); and
a coating unit (114) that is adapted to coat the optical fiber (104) to generate a coated optical fiber (105),
wherein a coating ovality of the coated optical fiber (105) is less than 4%.

9. The draw tower (100, 101) as claimed in claim 8, wherein the acoustic centering apparatus (112) is adapted to generate one or more first waves of the one or more acoustic waves in a first direction and one or more second waves of the one or more acoustic waves in a second direction that is opposite to the first direction to generate a plurality of standing waves, optionally wherein combination of the plurality of standing waves generates an acoustic radiation pressure that traps the optical fiber (104) in a central position along the vertical axis (Y-Y).

10. The draw tower (100, 101) as claimed in claim 8, wherein the acoustic centering apparatus (112) is anyone of, a ring-shaped acoustic centering apparatus (400), a concave-shaped acoustic centering apparatus (500), or a rectangular-shaped acoustic centering apparatus (600), optionally wherein the ring-shaped acoustic centring apparatus (400) comprises:
a ring (402); and
at least one transducer (122a); and
at least one reflector (128a);
wherein the at least one reflector (128a) is positioned along a circumference of the ring (402), and the at least one transducer (122a) is disposed opposite to the at least one reflector (128a).

11. The draw tower (100, 101) as claimed in claim 10, wherein the ring-shaped acoustic centering apparatus (400) generates an acoustic radiation pressure in a horizontal direction to the draw tower (100, 101) and to maintain the optical fiber (104) along the vertical axis (Y-Y).

12. The draw tower (100, 101) as claimed in claim 9, wherein the concave-shaped acoustic centering apparatus (500) comprises:
a first and a second hemispherical shells (502a, 502b),
the at least one transducer (122a), and
the at least one reflector (128a),
wherein the at least one transducer (122a) and the at least one reflector (128a) is disposed along a surface and
concurrent to a centre of the first and second hemispherical shells (502a, 502b); and
wherein the at least one transducer (122a) is disposed opposite to the at least one reflector (128a), optionally
wherein, the concave shaped acoustic centering apparatus (500) generates an acoustic radiation pressure in anyone of a horizontal direction and/or a vertical direction with respect to the draw tower (100, 101) to maintain the optical fiber (104) along the vertical axis (Y-Y).

13. The draw tower (100, 101) as claimed in claim 8, wherein the rectangular-shaped acoustic centering apparatus (600) comprises:
a first and second plates (602a, 602b),
a plurality of transducers (122), and
a plurality of reflectors (128),
wherein the plurality of transducers (122) and the plurality of reflectors (128) are disposed on the first and second plates (602a, 602b) that are on adjacent planes;
wherein a distance between the first and second plates (602a, 602b) is in a range of 10 cm to 30 cm, optionally
wherein the plurality of transducers are disposed opposite to the plurality of reflectors (128).

14. The draw tower (100, 101) as claimed in claim 12, wherein the rectangular shaped acoustic centering apparatus (600) generates an acoustic radiation pressure in a vertical direction with respect to the draw tower (100, 101) to maintain the optical fiber (104) along the vertical axis (Y-Y).

15. The draw tower (100, 101) as claimed in claim 8, wherein the acoustic centering apparatus (112) is disposed above the cooling unit (110), and/or wherein the acoustic centering apparatus (112) is disposed below the cooling unit (110).
